# EUROPEAN PATENT APPLICATION

(11) **EP 3 546 096 A1**
(43) Date of publication of application: **02.10.2019**
(21) Application number: 17873483.6
(22) Date of filing: 24.11.2017
(51) Int. Cl.: B23B 31/18

(54) **CHUCK DEVICE**

(30) Priority: 24.11.2016 JP 2016228367
(71) Applicant: Kitagawa Iron Works Co., Ltd, Fuchu-shi, Hiroshima 726-8610 (JP)
(72) Inventor: MASATSUGU, Naoyuki, Fuchu-shi Hiroshima 726-8610 (JP); NAKAMURA, Toshihito, Fuchu-shi Hiroshima 726-8610 (JP); NISHIMIYA, Tamio, Fuchu-shi Hiroshima 726-8610 (JP); YAMAGUCHI, Youji, Fuchu-shi Hiroshima 726-8610 (JP); ISHIKAWA, Shuya, Fuchu-shi Hiroshima 726-8610 (JP); HIRATA, Yuichi, Fuchu-shi Hiroshima 726-8610 (JP); MIKAMI, Masanobu, Fuchu-shi Hiroshima 726-8610 (JP); OKA, Yujiro, Fuchu-shi Hiroshima 726-8610 (JP)
(74) Representative: Gill, David Alan
(86) International application number: PCT/JP2017/042146
(87) International publication number: WO 2018/097219

(57) **Abstract**

The present invention provides an inexpensive chuck device that can achieve both a stable gripping operation and a high degree of accuracy in gripping and can also reduce limitations in the gripping of a workpiece. According to the present invention, a chuck device is provided, the chuck device being characterized by comprising a chuck main body and a master jaw, wherein the chuck main body has an oscillation supporting hole, and the oscillation supporting holes are rotatably provided in plurality around a rotational axis of the chuck main body, and wherein the master jaw has a top jaw detachably provided on one end thereof, and is fitted into the oscillation supporting hole while maintaining surface contact therewith to enable sliding contact.

## Description

### Technical Field

The present invention relates to a chuck device used in a state of being attached to a machine tool such as a lathe.

### Background Art

In a known chuck device, for example, disclosed in PTL 1, a top jaw is removably attached to one end of a master jaw, and a spherical part is formed at a midway portion of the master jaw. The spherical part is fitted to an oscillation supporting hole in a state where an outer peripheral surface of the spherical part is in slidable surface contact with an inner peripheral surface of the oscillation supporting hole.

### Citation List

### Patent Literature

[PTL 1] JP-A-2011-251347

### Summary of Invention

### Technical Problem

In the chuck device of PTL 1, the spherical part of the master jaw is supported by a bush which is a separate part from the chuck main body. Consequently, the problem arises that it is difficult to achieve a stable gripping operation and high gripping accuracy due to variations of the bush itself which occur during processing, variations during assembly of the bush into the chuck main body, slight misalignment of the bush relative to the chuck main body or deformation of the bush itself which occurs when the top jaw grips a workpiece, or the like.

Furthermore, the chuck device of PTL 1 requires the bush in addition to the chuck main body and has a large number of components. Consequently, there has been a problem of increased cost due to the increased number of processing steps, assembling steps, and the like.

In addition, in order to grip workpieces of various shapes, it has been desired to configure a chuck device, by increasing a size of a guide hole formed on a front surface of a chuck main body, to grip a workpiece while the workpiece is partly inserted into the guide hole.

The present invention has been made in view of such circumstances and is to provide a low-cost chuck device capable of achieving both a stable gripping operation and high gripping accuracy while reducing limitations when gripping a workpiece.

### Solution to Problem

According to the present invention, provided is a chuck device comprising: a chuck main body having a plurality of oscillation supporting holes which are provided to be rotatable around a rotation axis of the chuck main body; and master jaws fitted to the oscillation supporting holes in slidable surface contact therewith, respectively, each of the master jaws being provided with a removable top jaw at one end thereof.

In the present invention, the chuck device is configured such that the chuck main body directly supports the master jaws without a bush. That is, since it is not necessary to attach a bush as disclosed in PTL 1 to the chuck main body to support the master jaws, a gripping operation or gripping accuracy is not affected by variations of the bush itself which occur during processing or variations during assembly of the bush into the chuck main body, and a gripping operation or gripping accuracy is not affected by slight misalignment of the bush relative to the chuck main body when the top jaw grips a workpiece. Furthermore, since a thickness of a portion of the chuck main body supporting the master jaws is increased to increase rigidity, an oscillation movement of the master jaws is stabilized, and a gripping operation and gripping accuracy of the top jaw are improved. It is thus possible to provide a chuck device which can simultaneously achieve a stable gripping operation and high gripping accuracy. Furthermore, since the device does not comprise a bush as disclosed in PTL 1, the number of processing steps and assembling steps, as well as the number of components can be reduced, and thus the device can be made at low cost. In addition, as a result of eliminating a bush as disclosed in PTL 1 around the master jaws, a position of an inner peripheral surface of a guide hole in the chuck main body can be closer to the oscillation supporting holes to increase a size of the guide hole. Consequently, a workpiece can be gripped while the workpiece is partly inserted into the guide hole, and limitations when gripping a workpiece can be reduced.

Hereinafter, various embodiments of the present invention are exemplified. The embodiments described below can be combined with each other.

Preferably, each of the oscillation supporting holes has a recess on an inner peripheral surface; each of the master jaws has a projecting part at a midway portion; and an outer peripheral surface of the projecting part is fitted to an inner peripheral surface of the recess.

Preferably, the recess is an annular recessed groove which extends annularly around a centerline of each of the oscillation supporting holes and has a curving cross section; and the projecting part is a spherical part having a spherical shape.

Preferably, the annular recessed groove has an opening for extraction and insertion on a side opposite to a housing space; the opening for extraction and insertion has a circular shape whose inside diameter corresponds to an outside diameter of the spherical part, allows the spherical part to be extracted from or inserted into the annular recessed groove, and is provided, at a peripheral edge of the opening for extraction and insertion, with a projection projecting inward of the opening for extraction and insertion; the spherical part has, on an outer peripheral surface thereof, a contact avoiding part which is configured to be capable of avoiding contact with the projection when the spherical part is inserted into the annular recessed groove via the opening for extraction and insertion; and the chuck device is so configured that the spherical part can be inserted, in a state where the contact avoiding part corresponds to the projection, from the opening for extraction and insertion into the annular recessed groove and rotated around a centerline of the annular recessed groove, so that a portion of the outer peripheral surface of the spherical part excluding the contact avoiding part corresponds to the projection and that the spherical part is fitted to the annular recessed groove.

Preferably, the chuck main body comprises a case body processed as one component and a cover body closing an opening of the case body.

Preferably, the chuck device further comprises a plunger which is housed in the housing space at the oscillation supporting holes and has a plurality of interconnecting means respectively interconnecting with the other end of each of the master jaws, wherein the interconnecting means press the other end of each of the master jaws by a sliding operation along the rotation axis, so that one end of each of the master jaws approaches or moves away from the rotation axis and thus that the top jaw grips a workpiece or releases a gripped workpiece.

Preferably, annular stepped parts are provided so as to extend along an opening peripheral edge of the oscillation supporting holes, respectively; each of the annular stepped parts being formed on a front surface of the case body; and a seal member is fitted to each of the annular stepped parts to seal a portion between the case body and each of the master jaws.

### Brief Description of Drawings

Fig. 1 is a perspective view of a chuck device according to an embodiment of the present invention.
Fig. 2 is a cross-sectional view taken along a line II-II in Fig. 1.
Fig. 3 is a cross-sectional view taken along a line III-III in Fig. 2.
Fig. 4 is a partly exploded perspective view of a chuck device according to an embodiment of the present invention.
Fig. 5 is a view of an oscillation supporting hole in a chuck main body from a front surface side of the chuck main body, showing a state immediately before inserting a spherical portion of a master jaw into the oscillation supporting hole.
Fig. 6 is a view of an oscillation supporting hole in a chuck main body from a front surface side of the chuck main body, showing a state where a master jaw is rotated 90 degrees around a centerline of the oscillation supporting hole after inserting a spherical part of the master jaw into the oscillation supporting hole

### Description of Embodiments

Hereinafter, embodiments of the present invention will be described in detail with reference to the drawings.

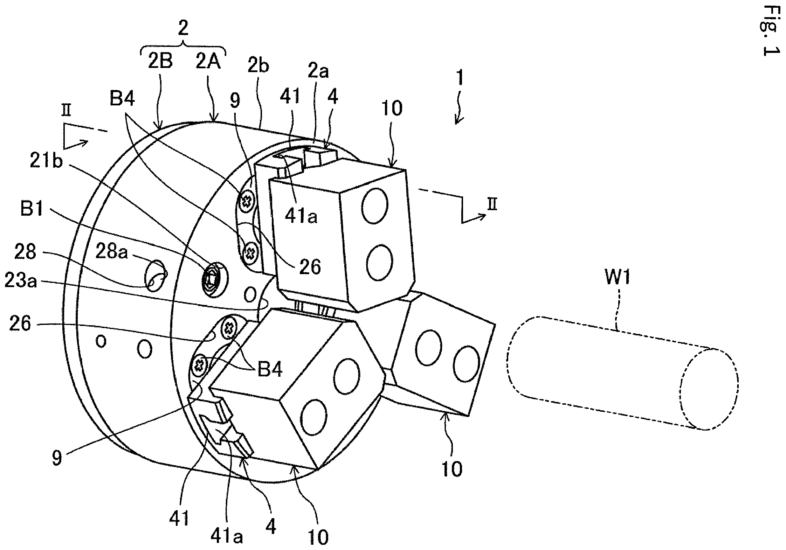

Fig. 1 shows a chuck device 1 according to an embodiment of the present invention. The chuck device 1 is used in a state of being attached to a machine tool such as a lathe and comprises a disk-shaped metal chuck main body 2 which can rotate around a center axis as a rotation axis C1.

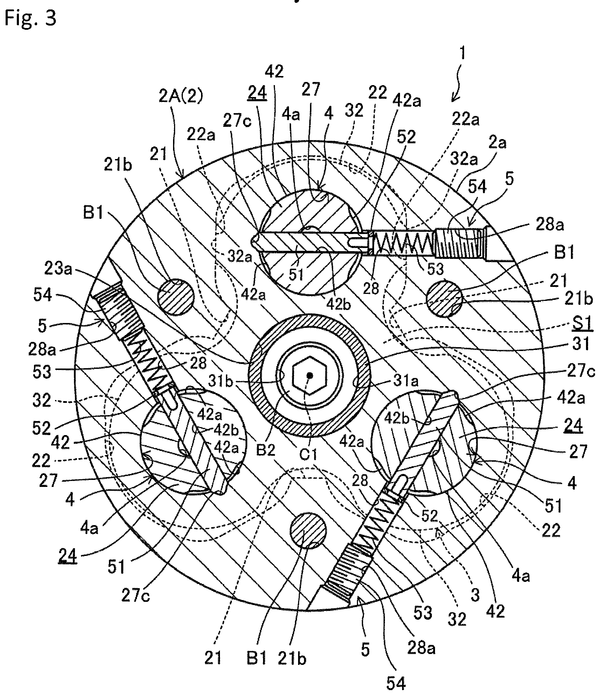

The chuck main body 2 comprises a bottomed cylindrical case body 2A whose cylinder centerline coincides with the rotation axis C1 and a disk-shaped cover body 2B closing an opening of the case body 2A. As illustrated in Fig. 3, a housing space S1 having a radial shape when viewed in an extending direction of the rotation axis C1 is formed in a portion surrounded by the case body 2A and the cover body 2B.

The case body 2A is processed as one component and comprises a disk-shaped front surface 2a and a cylindrical peripheral wall 2b extending along the rotation axis C1 from an outer peripheral edge of the front surface 2a.

On an inner peripheral surface of the peripheral wall 2b, three swelling parts 21 which swell in an approximately angular shape when viewed in the extending direction of the rotation axis C1 are formed at regular intervals around the rotation axis C1.

On a base end side of each of the swelling parts 21, each of fixing holes 21b which extends and penetrates in a same direction as the rotation axis C1 is formed, so that the chuck main body 2 can be fixed to a spindle of a machine tool (not illustrated) via the fixing holes 21b by means of fastening bolts B1.

Three curving recesses 22 having a concave cross section orthogonal to the rotation axis C1 are formed at regular intervals between the swelling parts 21 in the inner peripheral surface of the peripheral wall 2b.

The curving recesses 22 have a gently curving cross section orthogonal to the rotation axis C1 and extend in the same direction as the rotation axis C1.

On an inner peripheral surface of one of the three curving recesses 22, a pair of flat surfaces 22a extending in parallel to each other along the rotation axis C1 is formed so as to face each other in a peripheral direction of the chuck main body 2.

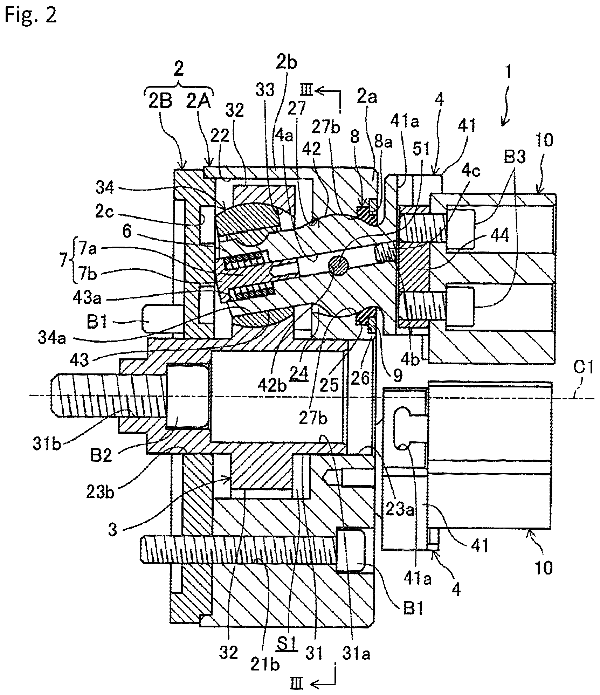

As illustrated in Fig. 2, a first guide hole 23a, which has a circular cross section and extends in the same direction as the rotation axis C1, in communication with the housing space S1 is formed at a position of the front surface 2a corresponding to the rotation axis C1.

Furthermore, as illustrated in Fig. 3, three oscillation supporting holes 24, which extend in the same direction as the rotation axis C1, in communication with the housing space S1 are formed on the front surface 2a at regular intervals around the first guide hole 23a (around the rotation axis C1).

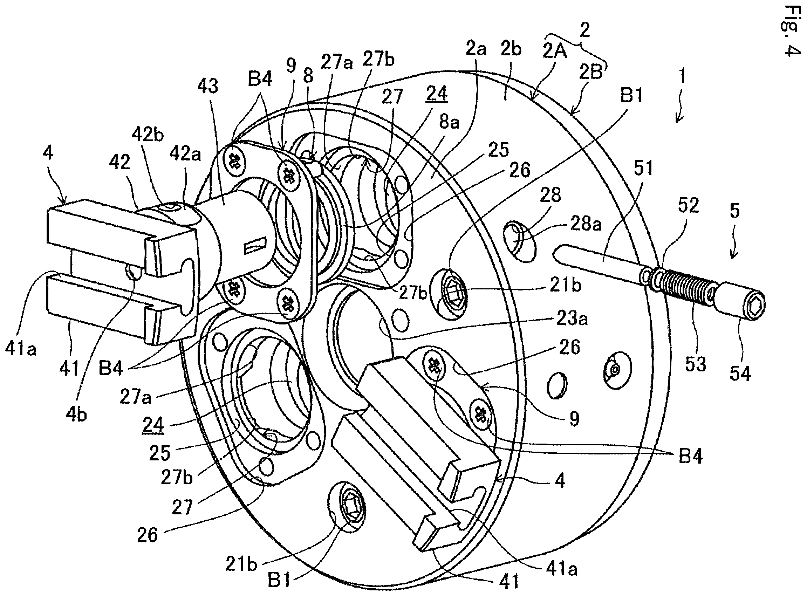

In addition, as illustrated in Fig. 4, each of first annular stepped parts 25 which has an annular shape and extends along an opening peripheral edge of each of the oscillation supporting holes 24 and each of second annular stepped parts 26 which extends along an opening peripheral edge of each of the first annular stepped parts 25 are formed on the front surface 2a. The second annular stepped parts 26 have a rectangular shape when viewed in the extending direction of the rotation axis C1.

As illustrated in Fig. 4, on an inner peripheral surfaces of each of the oscillation supporting holes 24, each of annular recessed grooves 27 (one example of "recess" in Claims) which has a curving cross section and extends annularly around a centerline of the oscillation supporting holes 24 is formed continuously from each of the first annular stepped parts 25.

Each of openings for extraction and insertion 27a of a circular shape is formed on a side of the annular recessed grooves 27 opposite to the housing space S1. An inner peripheral surface of the openings for extraction and insertion 27a extends straight along the rotation axis C1.

A pair of protrusions 27b (projection) projecting inward of the openings for extraction and insertion 27a is formed at an opening peripheral edge of each of the openings for extraction and insertion 27a so as to face each other in a radial direction of the chuck main body 2. The protrusions 27b have an arc shape when viewed in the extending direction of the rotation axis C1.

As illustrated in Fig. 3, each of groove-shaped engaging recesses 27c which is recessed to have an approximately triangular shaped cross section when viewed in the extending direction of the rotation axis C1 and extends along the rotation axis C1 is formed in a midway part of an inner peripheral surface of each of the openings for extraction and insertion 27a at one side in the peripheral direction of the chuck main body 2.

Furthermore, in an outer peripheral portion of the front surface 2a, three communication holes 28 extending straight in a direction orthogonal to a radial direction of the front surface 2a and orthogonal to the rotation axis C1 are formed at regular intervals around the rotation axis C1.

Each of the communication holes 28 corresponds to each of the oscillation supporting holes 24. One end of each of the communication holes 28 opens at a position facing each of the engaging recesses 27c on inner peripheral surfaces of the annular recessed grooves 27, while the other end of each of the communication holes 28 opens on an outer peripheral surface of the chuck main body 2.

Each of female thread parts 28a is formed on an inner peripheral surface of each of the communication holes 28 on a side closer to an outer peripheral surface of the front surface 2a.

As illustrated in Fig. 2, in a central portion of the cover body 2B, a second guide hole 23b, which has a circular cross section and extends in the same direction as the rotation axis C1, in communication with the housing space S1 is formed so as to face the first guide hole 23a.

Furthermore, as illustrated in Fig. 2, three annular grooves 2c having an annular shape when viewed in the extending direction of the rotation axis C1 are formed at positions corresponding to the oscillation supporting holes 24.

As illustrated in Fig. 3, a plunger 3 having a radial shape when viewed in the extending direction of the rotation axis C1 is housed in the housing space S1.

The plunger 3 comprises a sliding shaft part 31 located on the rotation axis C1 and three overhanging parts 32 radially projecting, when viewed in the extending direction of the rotation axis C1, from a midway part of an outer peripheral surface of the sliding shaft part 31. Each of the overhanging parts 32 is located inside each of the curving recesses 22.

One end of the sliding shaft part 31 is slidably fitted and inserted into the first guide hole 23a formed on the front surface 2a of the case body 2A, while the other end is slidably fitted and inserted into the second guide hole 23b formed on the cover body 2B. The first and second guide holes 23a, 23b guide the sliding shaft part 31, so that the plunger 3 slides along the rotation axis C1.

A screw guiding part 31a opening at one end of the sliding shaft part 31 is formed in an approximately half portion of the sliding shaft part 31 at one end thereof.

Meanwhile, a screw inserting hole 31b which opens at the other end of the sliding shaft part 31 and communicates with the screw guiding part 31a is formed at the other end of the sliding shaft part. The plunger 3 can be fixed to a draw bar (not illustrated) by means of fastening bolts B2 inserted through the screw inserting hole 31b via the screw guiding part 31a.

Furthermore, a pair of positioning surfaces 32a respectively in sliding contact with each of the flat surfaces 22a is formed on an outer peripheral surface of the overhanging part 32 located inside the curving recess 22 with the pair of flat surfaces 22a. The positioning surfaces 32a are adapted to position the plunger 3 around the rotation axis C1.

Each of rotation supporting holes 33 extending and penetrating in the same direction as the rotation axis C1 is formed at a center of each of the overhanging parts 32. An inner peripheral surface of the rotation supporting holes 33 is a concave groove which annularly extends around a centerline of the rotation supporting holes 33 and has a curving cross section.

Each of ring members 34 (interconnecting means) provided with each of through holes 34a at a center thereof is fitted to each of the rotation supporting holes 33.

An outer peripheral surface of the ring members 34 which extends annularly around a centerline of the ring members 34 has a protruding shape with a curving cross section and is in slidable surface contact with an inner peripheral surface of the rotation supporting holes 33.

As illustrated in Fig. 2, three master jaws 4 approximately T-shaped in a side view are attached to the chuck main body 2.

Each of the master jaws 4 comprises each of mounting parts 41 which is provided at one end thereof and extends along a radial direction of the chuck main body 2, each of spherical parts 42 (one example of "projecting part" in Claims) provided continuously from the mounting parts 41 in a midway part of the master jaws 4, and each of round bar-shaped sloping shaft parts 43 which is provided on the other end of the master jaws 4, extends and inclines so as to gradually approach the rotation axis C1 as being away from the spherical parts 42.

Each of the mounting parts 41 is provided with each of mounting grooves 41a which has an approximately T-shaped cross section and extends in the radial direction of the chuck main body 2. Each of fastened bars 44 having an approximately T-shaped cross section is fitted to each of the mounting grooves 41a.

Each of block-shaped top jaws 10 can be removably attached to each of the fastened bars 44 by means of fastening bolts B3.

An outside diameter of the spherical parts 42 correspond to an inside diameter of the openings for extraction and insertion 27a. The spherical parts 42 thus can be extracted from or inserted into the annular recessed grooves 27 via the openings for extraction and insertion 27a.

As illustrated in Fig. 3, a pair of contact avoiding parts 42a is formed on both sides, in the peripheral direction of the chuck main body 2, of each of the spherical parts 42.

The pair of the contact avoiding parts 42a has a concave surface recessed in a stepped shape with a shallow bottom so as to correspond to the shape of the protrusions 27b at the annular recessed grooves 27. Bottom surfaces of the contact avoiding parts 42a slightly overhang radially outward of the chuck body 2 so as to form a gently curving surface.

Dimensions between the pair of the contact avoiding parts 42a correspond to dimensions between projection ends of the pair of protrusions 27b at the annular recessed grooves 27 of the chuck main body 2.

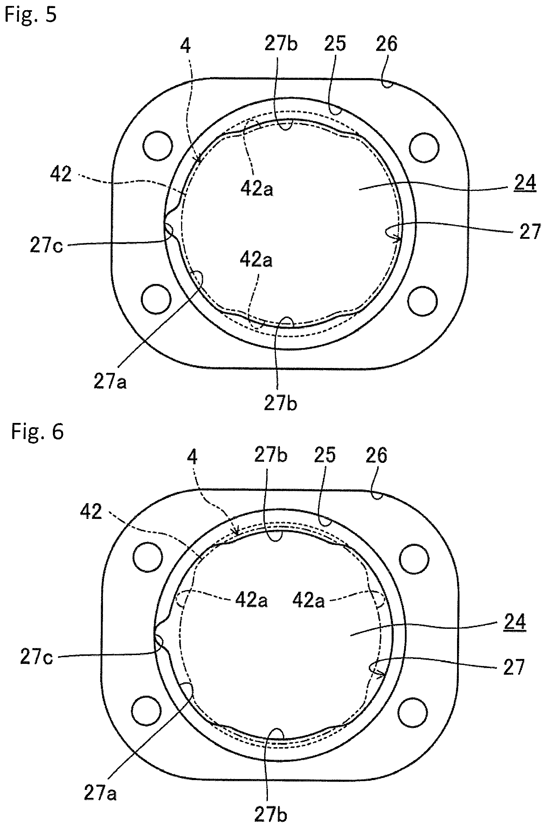

That is, the dimensions between the projection ends of the pair of protrusions 27b at the annular recessed grooves 27 are set smaller than outside diameter of the spherical parts 42. As illustrated in Fig. 4 and Fig. 5, when the spherical parts 42 are inserted into the annular recessed grooves 27 from a side opposite to the housing space S1 in a state where the contact avoiding parts 42a correspond to the protrusions 27b, inner peripheral surfaces of the openings for extraction and insertion 27a guide outer peripheral surfaces of the spherical parts 42 while the contact avoiding parts 42a avoid contact with the protrusions 27b, so that the spherical parts 42 are inserted into the annular recessed grooves 27.

Furthermore, the spherical parts 42 in a state of being inserted into the annular recessed grooves 27 are rotated 90 degrees around a centerline of the annular recessed grooves 27, so that a portion of the outer peripheral surfaces of the spherical parts 42 excluding the contact avoiding parts 42a correspond to the protrusions 27b, as illustrated in Fig. 6. Consequently, the spherical parts 42 are fitted to the annular recessed grooves 27, while the outer peripheral surfaces of the spherical parts 42 are in slidable surface contact with inner peripheral surfaces of the annular recessed grooves 27.

Each of linear pin insertion holes 42b which passes through a center of the spherical parts 42 and opens in a central portion of each pair of the contact avoiding parts 42a is formed in each of the spherical parts 42. Consequently, while the spherical parts 42 are fitted to the annular recessed grooves 27, one end opening of the pin insertion holes 42b corresponds to the engaging recesses 27c, and the other end opening of the pin insertion holes 42b corresponds to the communication holes 28.

As illustrated in Fig. 2, the sloping shaft parts 43 are slidably fitted and inserted into the through holes 34a of the ring members 34.

That is, the plunger 3 interconnects with the other end side of the master jaws 4 via the ring members 34.

Furthermore, each of the sloping shaft parts 43 is provided with each of housing recesses 43a opening on a side opposite to the mounting parts 41.

Each of working holes 4a extending substantially straight on a central axis of the sloping shaft parts 43 through a central portion of the spherical parts 42 is formed inside each of the master jaws 4. One end of the working holes 4a opens at a midway part of the mounting grooves 41a, while the other end of the working holes 4a opens at a center of a bottom of the housing recesses 43a.

Each of thread parts 4b is formed on an inner peripheral surface at one end side of each of the working holes 4a, and each of first fastening screws 4c is screwed to each of the thread parts 4b.

As illustrated in Fig. 2 and Fig. 4, each of rubber seal members 8 having an annular shape is fitted to each of the first annular stepped parts 25 so as to seal between the chuck main body 2 and the master jaws 4. In this regard, the seal members 8 may not be made of a rubber material and may be made of a silicon material.

Each of third annular stepped parts 8a annularly extending along an outer peripheral edge of the seal members 8 is formed on a side of each of the seal members 8 opposite to the chuck main body 2.

Each of cover plates 9 is fitted in a groove formed by each of the second annular stepped parts 26 and each of the third annular stepped parts 8a. The seal members 8 are attached to the chuck main body 2 by fastening the cover plates 9 to the chuck main body 2 by means of the fastening bolts B4.

As illustrated in Fig. 2, each of first coil springs 6 and each of sliding members 7 approximately T-shaped in a side view are housed inside each of the housing recesses 43a of the sloping shaft parts 43 in the master jaws 4.

Each of the sliding members 7 comprises each of elongated bar-shaped parts 7a and each of disk-shaped flange parts 7b continuously provided at one end of the bar-shaped parts 7a.

The bar-shaped parts 7a are slidably fitted and inserted into the other end of the working holes 4a. The sliding members 7 are configured to move forward and backward to the housing space S1 by a sliding operation.

The first coil springs 6 are wound around the bar-shaped parts 7a of the sliding members 7 and abut on the flange parts 7b of the sliding members 7 and bottom surfaces of the housing recesses 43a. The first coil springs 6 urge the sliding members 7, so that the sliding members 7 advance in the housing space S1 and thus the flange parts 7b contact a portion of the cover body 2B surrounded by the annular grooves 2c.

As illustrated in Fig. 3 and Fig. 4, each of rotation regulating mechanisms 5 is attached to each of the master jaws 4.

The rotation regulating mechanisms 5 comprises each of pins 51 slidably inserted to the pin insertion holes 42b, each of washers 52 and second coil springs 53 housed in the communication holes 28, and each of second fastening screws 54s screwed to the female thread parts 28a.

A tip end of the pins 51 has an approximately triangular cross section which gradually narrows toward the tip end. A shape of the tip end corresponds to a shape of the engaging recesses 27c.

Furthermore, the tip end of the pins 51 protrudes from an opening on one side of the pin insertion holes 42b, while a base end of the pins 51 protrudes from an opening on the other side of the pin insertion holes 42b and contacts the second coil springs 53 via the washers 52.

Tip end portions of the pins 51 are adapted to be fitted to the engaging recesses 27c, when the pins 51 are urged toward the engaging recesses 27c by an urging force of the second coil springs 53.

When the plunger 3 slides along the rotation axis C1 to either side, the ring members 34 in sliding contact with the rotation supporting holes 33 press the other end of the master jaws 4 in a direction approaching the rotation axis C1 or in a direction moving away from the rotation axis C1. Furthermore, the other end of the master jaws 4 pressed by the ring members 34 oscillates around the pins 51 (the spherical parts 42) while sliding relative to the ring members 34, and thereby one end of the master jaws 4 approaches or moves away from the rotation axis C1. The top jaws 10 thus grip a workpiece W1 or release the gripped workpiece.

Furthermore, as illustrated in Fig. 3, the master jaws 4 are configured to be slightly rotatable around a centerline of the annular recessed grooves 27 by a gap formed between an outer peripheral surface of the pins 51 and an inner peripheral surface of the communication holes 28 when the top jaws 10 grip the workpiece W1 and a force is applied to the master jaws 4 around a centerline of the oscillation supporting holes 24. In this regard, the master jaws 4 are configured to rotate, when top jaws 10 release the gripped workpiece W1, around the centerline of the annular recessed grooves 27 until the master jaws 4 respectively return to an original position by an urging force of the second coil springs 53.

As described above, according to the embodiments of the present invention, since it is not necessary to attach a bush as disclosed in PTL 1 to the chuck main body 2 to support the master jaws 4, a gripping operation or gripping accuracy is not affected by variations of the bush itself which occur during processing or variations during assembly of the bush into the chuck main body, and a gripping operation or gripping accuracy is not affected by slight misalignment of the bush relative to the chuck main body when the top jaws 10 grip the workpiece W1. Furthermore, since a thickness of a portion of the chuck main body 2 supporting the master jaws 4 is increased to increase rigidity, an oscillation movement of the master jaws 4 is stabilized, and a gripping operation and gripping accuracy of the top jaws 10 are improved. It is thus possible to provide the chuck device 1 which can simultaneously achieve a stable gripping operation and high gripping accuracy. Furthermore, since the chuck device 1 does not comprise a bush as disclosed in PTL 1, the number of processing steps and assembling steps, as well as the number of components can be reduced and thus the chuck device 1 can be made at low cost. In addition, as a result of eliminating a bush as disclosed in PTL 1 around the master jaws 4, a position of an inner peripheral surface of the first guide holes 23a can be closer to the oscillation supporting holes 24 to increase the size of the first guide holes 23a. Consequently, the workpiece W1 can be gripped while the workpiece W1 is partly inserted into the guide holes 23a, and limitations when gripping the workpiece W1 can be reduced.

Furthermore, the spherical parts 42 are fitted to the annular recessed grooves 27 while the outer peripheral surfaces of the spherical parts 42 are in sliding contact with the inner peripheral surfaces of the annular recessed grooves 27, only by sequentially performing an operation of inserting the spherical parts 42 of the master jaws 4 into the annular recessed grooves 27 and an operation of rotating the master jaws 4 around the centerline of annular recessed grooves 27. It is thus not necessary to use a component other than the master jaws 4 and the chuck main body 2 for fitting the spherical parts 42 to the annular recessed grooves 27, and the chuck device 1 can be manufactured at low cost.

Furthermore, when compared with a structure as disclosed in PTL 1 in which a seal member seals between a bush and a master jaw, there is no limitation that an outer shape of the seal members 8 must be smaller than an outer shape of the bush. Dimensions of the outer shape and the thickness of the seal members 8 can be thus larger than those of the structure as disclosed PTL 1, and durability of the seal members 8 can be enhanced.

While each of the annular recessed grooves 27 is provided with a pair of the protrusions 27b in the embodiments of the present invention, the protrusions 27b may not be in a pair, and thus each of the annular recessed grooves 27 may be provided with one protrusion, or three or more protrusions.

### Industrial Applicability

The present invention is suitable for a chuck device used in a state of being attached to a machine tool such as a lathe.

While embodiments and modifications have been described above, they have been presented by way of example and are not intended to limit the scope of the invention. These novel embodiments may be embodied in other various forms. Various omissions, substitutions, and changes can be made without departing from gist of the invention, and such embodiments and modifications thereof are included in the gist and the scope of the invention specified in claims and the scope of equivalent of the invention.

### Reference Sign List

- 1: Chuck device
- 2: Chuck main body
- 2A: Case body
- 2B: Cover body
- 3: Plunger
- 4: Master jaw
- 8: Seal member
- 10: Top jaw
- 24: Oscillation supporting hole
- 25: First annular stepped part
- 27: Annular recessed groove
- 27a: Opening for extraction and insertion
- 27b: Protrusion (projection)
- 34: Ring member (interconnecting means)
- 42: Spherical part
- 42a: Contact avoiding part
- C1: Rotation axis
- S1: Housing space
- W1: Workpiece

## Claims

1. A chuck device comprising:
a chuck main body having a plurality of oscillation supporting holes which are provided to be rotatable around a rotation axis of the chuck main body; and
master jaws fitted to the oscillation supporting holes in slidable surface contact therewith, respectively, each of the master jaws being provided with a removable top jaw at one end thereof.

2. The chuck device of Claim 1, wherein:
each of the oscillation supporting holes has a recess on an inner peripheral surface;
each of the master jaws has a projecting part at a midway portion; and
an outer peripheral surface of the projecting part is fitted to an inner peripheral surface of the recess.

3. The chuck device of Claim 2, wherein:
the recess is an annular recessed groove which extends annularly around a centerline of each of the oscillation supporting holes and has a curving cross section; and
the projecting part is a spherical part having a spherical shape.

4. The chuck device of Claim 3, wherein:
the annular recessed groove has an opening for extraction and insertion on a side opposite to a housing space;
the opening for extraction and insertion has a circular shape whose inside diameter corresponds to an outside diameter of the spherical part, allows the spherical part to be extracted from or inserted into the annular recessed groove, and is provided, at a peripheral edge of the opening for extraction and insertion, with a projection projecting inward of the opening for extraction and insertion;
the spherical part has, on an outer peripheral surface thereof, a contact avoiding part which is configured to be capable of avoiding contact with the projection when the spherical part is inserted into the annular recessed groove via the opening for extraction and insertion; and
the chuck device is so configured that the spherical part can be inserted, in a state where the contact avoiding part corresponds to the projection, from the opening for extraction and insertion into the annular recessed groove and rotated around a centerline of the annular recessed groove, so that a portion of the outer peripheral surface of the spherical part excluding the contact avoiding part corresponds to the projection and that the spherical part is fitted to the annular recessed groove.

5. The chuck device of any one of Claims 1 to 4, wherein the chuck main body comprises a case body processed as one component and a cover body closing an opening of the case body.

6. The chuck device of any one of Claims 1 to 5 further comprising
a plunger which is housed in the housing space at the oscillation supporting holes and has a plurality of interconnecting means respectively interconnecting with the other end of each of the master jaws, wherein
the interconnecting means press the other end of each of the master jaws by a sliding operation along the rotation axis, so that one end of each of the master jaws approaches or moves away from the rotation axis and thus that the top jaw grips a workpiece or releases a gripped workpiece.

7. The chuck device of any one of Claims 1 to 6, wherein:
annular stepped parts are provided so as to extend along an opening peripheral edge of the oscillation supporting holes, respectively,
each of the annular stepped parts being formed on a front surface of the case body; and
a seal member is fitted to each of the annular stepped parts to seal a portion between the case body and each of the master jaws.
